Europäisches Patentamt

European Patent Office

Office européen des brevets

(19)

(11) Numéro de publication: **0 316 249**

**A1**

## (12) DEMANDE DE BREVET EUROPEEN

(21) Numéro de dépôt: 88460029.7

(22) Date de dépôt: 10.11.88

(51) Int. Cl.⁴: **G 09 B 9/08**

(30) Priorité: **12.11.87 FR 8715819**

(43) Date de publication de la demande:
**17.05.89 Bulletin 89/20**

(84) Etats contractants désignés:
**AT BE CH DE ES GB GR IT LI LU NL SE**

(71) Demandeur: **Roche, Jean-José**
**32, rue St Denis de Gastines**
**F-53500 Ernée (FR)**

(72) Inventeur: **Roche, Jean-José**
**32, rue St Denis de Gastines**
**F-53500 Ernée (FR)**

(74) Mandataire: **Martin, Jean-Jacques et al**
**Cabinet REGIMBEAU 11, rue Franz Heller**
**F-35700 Rennes (FR)**

(54) **Manège à effet ascensionnel équipé d'un avion.**

(57) Manège à effet ascensionnel, du type comprenant un avion destiné à l'entraînement et/ou à l'amusement d'un pilote.

Ce manège comprend une perche mobile en rotation autour d'un axe vertical (A1) de manière à décrire un mouvement circulaire autour de cet axe, cette perche étant également mobile autour d'un axe horizontal (A2) de manière à permettre une variation en altitude de l'avion au cours de son mouvement circulaire, un contrepoids étant prévu à l'extrémité de la perche opposé à l'avion, de l'autre côté de l'axe vertical (A1) ; conformément à l'invention, l'avion est du type biplan, et sa fixation à la perche (1) est assurée au moyen d'un mâchoire (3) qui coopère avec une couronne circulaire (4) entourant le fuselage (20), la mâchoire (3) supportant la couronne (4) et l'avion (2) à l'extrémité de la perche (1), tout en autorisant leur libre rotation autour de l'axe longitudinal (X-X') de l'avion, ce qui permet au pilote d'effectuer des tonneaux.

Manège destiné à des activités de sport et de loisir et/ou à l'entraînement des pilotes à la voltige.

FIG.1

**Description**

### MANEGE A EFFET ASCENSIONNEL EQUIPE D'UN AVION

La présente invention concerne un manège à effet ascensionnel, et plus précisément un manège du type comprenant un avion destiné à l'entraînement et/ou à l'amusement d'un pilote.

Des manèges à effet ascensionnel destinés à des activités récréatives, sportives, ou à l'entraînement d'un pilote ont déjà été proposés, notamment par les documents US-A-2 896 947, DE-C-833 909, FR-A-801 044 et WO-87/00 141. De manière générale, ce type de manège comporte un bras mobile en rotation autour d'un axe vertical, à l'extrémité duquel est monté un petit avion - ou un appareil similaire d'exercice - qui reçoit le pilote. Il est prévu un contrepoids qui agit sur le bras, du côté opposé à celui portant l'avion, de façon à équilibrer sensiblement les poids de l'avion et du pilote. Le bras peut en outre osciller dans le sens vertical, ce qui permet à l'avion de s'élever et de descendre au cours de son vol rotatoire.

Dans ces manèges connus, la liaison de l'avion avec le bras, qui est située sensiblement au centre de gravité de l'avion, est telle que l'avion puisse évoluer librement en toute direction, c'est-à-dire effectuer des mouvements de tangage, de roulis, et de lacet, ceci pour rapprocher le plus possible les conditions de l'exercice des conditions réelles de vol. Toutefois, la liaison limite forcément l'amplitude de la plupart des mouvements, et notamment celle des mouvements de tangage et de roulis, de sorte qu'il n'est manifestement pas possible au pilote d'effectuer des figures de voltige comme des tonneaux et des boucles (ou "loopings").

On connait par ailleurs, par le document US-A-2 357 481, un appareil d'entraînement du même type général que celui qui vient d'être évoqué, dans lequel l'avion est disposé à l'intérieur d'une armature en forme de cadre montée à l'extrémité du bras. L'avion est guidé en rotation par rapport à cette armature, dans des paliers prévus aux extrémités avant et arrière du fuselage ; il peut ainsi tourner autour de son axe longitudinal et donc effectuer des tonneaux.

Enfin, le document GB-A-127 820 décrit un dispositif d'apprentissage au vol comprenant un cockpit (dépourvu d'ailes) possèdant plusieurs degrés de liberté ; dans un mode de réalisation particulier (figures 14 et 15) le cockpit est muni de galets périphériques coopérant avec un anneau extérieur, ce qui assure un guidage en rotation du cockpit autour de son axe longitudinal.

Si ces deux dispositifs connus permettent théoriquement de reproduire des figures de voltige variées et représentatives de la réalité, ils ne donnent pas en pratique toute satisfaction s'ils sont utilisés sur un manège. En effet, la rotation de ce dernier à des vitesses faibles ou moyennes engendre des effets de tangage intempestif et l'avion devient instable si bien qu'il est délicat, voire impossible de contrôler son équilibre dynamique. Ce phénomène est dû au fait qu'à des vitesses relativement peu élevées telles que celles rencontrées sur un manège, l'aileron situé au sommet de la dérive arrière - ou stabilo - est incapable d'assurer convenablement la fonction stabilisatrice qui lui est normalement dévolue.

En outre, le dispositif selon US-A-2 357 481 est complexe, peu esthétique et encombrant ; la présence de l'armature perturbe l'écoulement de l'air sur le fuselage et nuit à la visibilité ; de plus elle limite nécessairement l'envergure de l'avion puisque celui-ci doit pouvoir tourner à l'intérieur de l'armature.

L'invention a pour objectif de pallier ces difficultés en proposant un manège du genre évoqué, dont l'avion puisse réaliser avec une grande stabilité des figures de voltiges, ce manège étant néanmoins simple, robuste, esthétique, d'un fonctionnement sûr, et d'un prix de revient relativement faible.

Ces différents résultats sont atteints selon l'invention grâce au fait :
- d'une part que la fixation de l'avion à la perche est assurée au moyen d'une mâchoire qui est adaptée pour retenir une couronne circulaire solidaire de l'avion et entourant le fuselage, cette couronne étant contenue dans un plan perpendiculaire à l'axe longitudinal de l'avion et centrée sur cet axe, la mâchoire supportant la couronne et l'avion à l'extrémité de la perche, tout en autorisant leur libre rotation autour dudit axe longitudinal ;
- d'autre part que l'avion est un avion du type biplan, dont les deux plans sont situés de part et d'autre de l'axe longitudinal de la perche, l'un en avant et l'autre en arrière de ce dernier, de telle manière qu'ils engendrent au cours du mouvement circulaire du manège deux moments de portance sensiblement égaux et opposés, ce qui permet d'éviter tout effet de tangage intempestif (et donc d'améliorer la stabilité du vol).

Les deux plans (avant et arrière) sont avantageusement décalés en hauteur de façon à ce que l'écoulement de l'air sur le plan avant ne perturbe pas - ou pratiquement pas - l'écoulement de l'air sur le plan arrière.

Dans la présente demande, on entendra par le terme "couronne", non seulement une couronne circulaire complète - autorisant des figures de tonneaux complètes - mais aussi une couronne incomplète (ou partielle), en form d'arc de cercle - n'autorisant que des rotations d'amplitude limitée autour de l'axe de roulis.

Le centre de gravité de l'ensemble constitué par l'avion et le pilote sera avantageusement situé sensiblement dans le plan qui contient la couronne.

Par ailleurs, selon un certain nombre de caractéristiques avantageuses :
- la couronne a une section en forme de "T" ;
- le contact de la mâchoire avec la couronne se fait par l'intermédiaire de galets de roulement ;
- il est prévu deux jeux de galets de roulement qui sont situés de chaque côté de la branche supérieure de la section en "T" de la couronne, le jeu situé au-dessous de ladite branche supérieure comprenant des galets disposés de part et d'autre de la branche verticale de cette section ;

- l'un des deux jeux de galets est porté par un étrier mobile sollicité par un système élastique qui applique ces galets élastiquement contre la couronne.

En outre, la mâchoire est de préférence articulée autour d'un axe qui correspond sensiblement à l'axe longitudinal de la perche, ou est voisin de celui-ci. Il est ainsi possible au pilote non seulement d'effectuer des tonneaux mais aussi d'effectuer des boucles, ainsi que, naturellement, des figures combinées associant tonneaux et boucles.

Il peut être prévu, à l'intérieur de l'avion, un contrepoids mobile qui peut être déplacé suivant la direction longitudinale de l'avion, dans un sens ou dans l'autre, de manière à permettre un équilibrage statique de ce dernier (en fonction du poids du pilote) par rapport à l'axe longitudinal de la perche.

L'entraînement de l'avion peut se faire, comme dans les dispositifs connus, par une hélice entraînée par un moteur, par exemple un moteur électrique logé dans l'avion.

D'autres caractéristiques et avantages de l'invention apparaîtront à la lecture de la description détaillée qui suit, faite en référence aux dessins annexés qui en présentent un mode de réalisation préférentiel.

Sur ces dessins :

- la figure 1 représente en perspective l'ensemble du manège ;

- la figure 2 représente, en vue de face, l'avion fixé en bout de perche ;

- la figure 3 est une vue de côté en perspective de ce même avion ;

- la figure 4 est une vue en coupe transversale de l'avion qui représente schématiquement le mode de fixation de l'avion à l'extrémité de la perche ;

- la figure 5 est un détail plus précis de la mâchoire de retenue et d'une partie de la couronne ;

- la figure 6 est une vue de côté coupée par le plan VI-VI de la figure 5 ;

- la figure 7 est une vue schématique de côté de l'avion, destinée à montrer le système d'équilibrage statique de l'avion autour de l'axe de la perche.

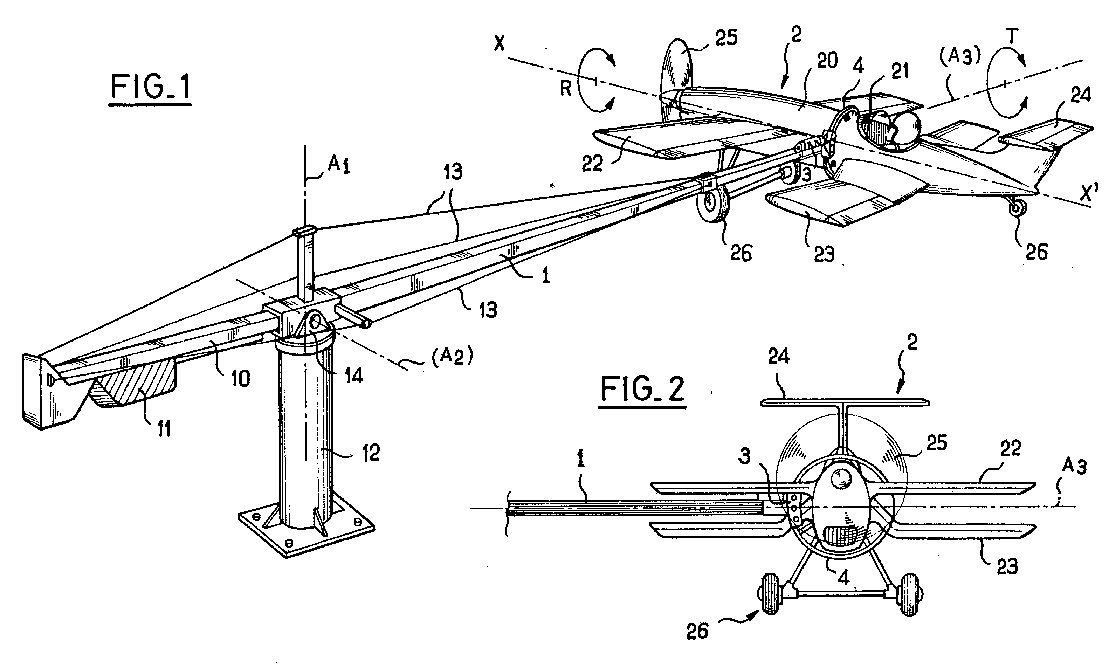

Le manège à effet ascensionnel représenté à la figure 1, est du même type général que ceux évoqués plus haut en référence à l'état de la technique.

Ce manège comprend un palier fixe 12, d'axe vertical (A1), dans lequel est articulée une chape 14. Cette dernière supporte un bras, ou perche 1, qui peut pivoter autour d'un axe horizontal (A2).

A l'une de ses extrémités, la perche 1 supporte un avion 2, tel qu'un petit avion léger monoplace ; de l'autre côté de l'axe (A1), la perche 1 se prolonge par une partie 10, plus courte, qui est équipée d'un contrepoids 11 ; ce dernier est avantageusement mobile le long de la partie 10, ce qui permet d'ajuster le moment qu'il exerce par rapport à l'axe (A2), afin de compenser le poids de l'avion 2 et de son pilote. Des haubans 13 sont prévus pour améliorer la résistance à la flexion de la perche.

L'avion 2 est un avion du genre biplan ; il est pourvu à sa partie avant d'une paire d'ailes 22 et à sa partie arrière d'une paire d'ailes 23 ; ces deux plans 22, 23 sont décalés en hauteur comme on le voit plus particulièrement à la figure 2, le plan avant étant situé à un niveau supérieur par rapport au plan arrière.

L'avion 2 possède par ailleurs un fuselage désigné 20, une hélice 25 entraînée par un moteur approprié, par exemple un moteur électrique (non représenté) logé dans la partie avant du fuselage, un aileron arrière ou stabilo 24.

L'axe longitudinal de l'avion est représenté par la référence (X-X'), cet axe correspondant à l'axe de roulis (double flèche R). L'axe de tangage (double flèche T) est référencé (A3).

L'avion est par ailleurs équipé d'un train d'atterrissage 26, qui permet son roulage au sol avant l'envol et après atterrissage.

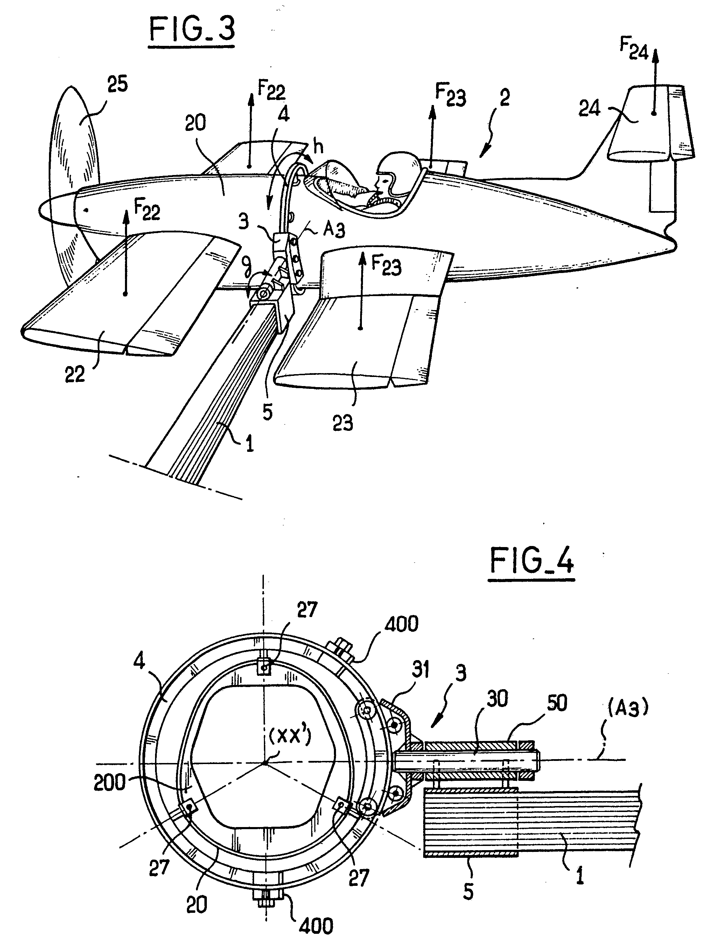

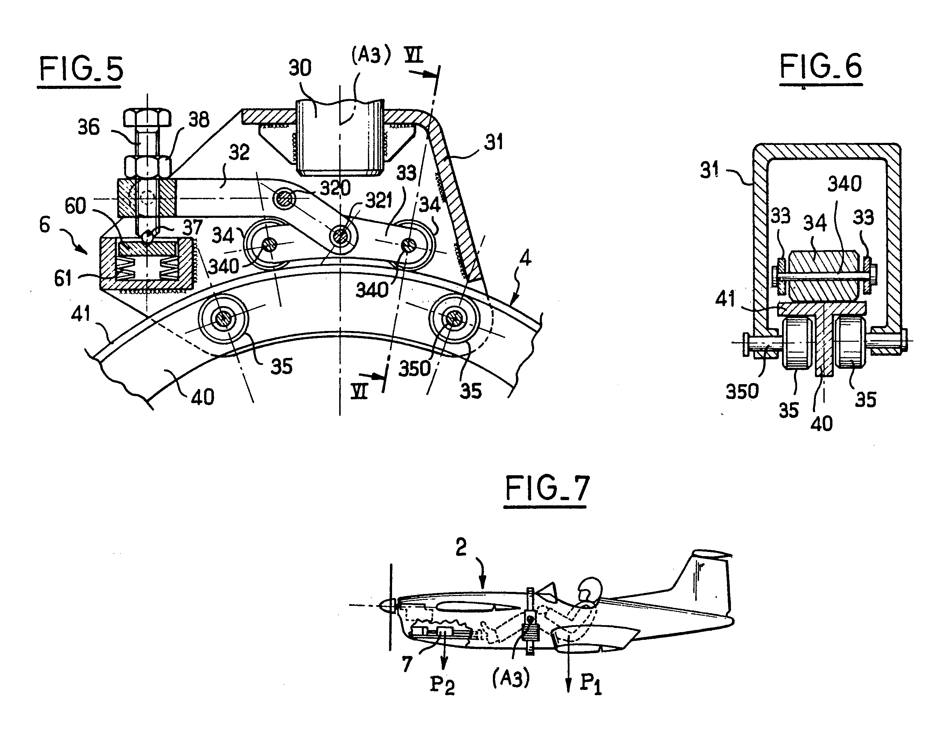

Le cockpit recevant le pilote est situé par exemple à l'aplomb de la zone avant du plan arrière 23 (voir figures 3 et 7 notamment).

A l'extrémité de la perche 1 est fixé un dispositif de retenue de l'avion 3 qui consiste en une mâchoire coopérant avec une couronne annulaire, c'est-à-dire un anneau 4, qui est centré sur l'axe (X-X').

Celui-ci est un profilé métallique, de section en forme de "T", qui entoure complètement le fuselage 20, légèrement en avant du cockpit 21. La position longitudinale de l'anneau 4 est déterminée de telle manière que le centre de gravité de l'ensemble avion-pilote soit sensiblement situé dans le plan vertical de cet anneau.

La couronne 4 est fixée solidement à la structure de l'avion, en l'occurrence au couple transversal 200 situé dans cette zone, la fixation étant faite par des moyens connus appropriés tels que des boulons 27.

La mâchoire 3 est fixée en bout de perche 1 au moyen d'une ferrure 5, supportant un palier 50 dont l'axe (A3) est parallèle à la direction longitudinale de la perche 1 ; le décalage entre l'axe (A3) et l'axe longitudinal de la perche est de quelques centimètres seulement ce qui est faible par rapport aux dimensions du manège ; en fait, l'axe (A3) correspond donc sensiblement à l'axe longitudinal de la perche. La mâchoire 3 comprend un arbre 30 qui est guidé en rotation et immobilisé en translation dans le palier 50, si bien que l'ensemble de la mâchoire peut tourner autour de l'axe (A3).

Cette mâchoire 3 comprend une armature métallique 31 qui a la forme générale d'une chape dont les joues viennent se placer de part et d'autre de la couronne 4 ; comme on le voit plus particulièrement à la figure 6.

Chacune de ces joues est munie d'une paire de galets 35 dont les axes 350 sont guidés en rotation et immobilisés en translation dans l'armature 31. Il est donc prévu deux paires de galets 35, et chacune de ces paires est située de part et d'autre de la branche verticale 40 de la section en "T" de la couronne 4, l'ensemble de ces galets s'appliquant contre la face inférieur de la barre transversale supérieure 41 de ce "T".

De l'autre côté de la branche 41, est disposée une paire de galets 34, supportés par des axes 340, et portés par un étrier mobile 33. Ce dernier est monté, par l'intermédiaire d'un axe d'articulation 321, à l'extrémité d'un levier 32, celui-ci étant lui-même articulé autour d'un axe 320 dans l'armature 31.

Un système élastique 6 agit sur le levier 32, de manière à appliquer fortement et élastiquement les deux galets 34 contre la surface externe de l'anneau 4.

Le système élastique 6 comprend par exemple un jeu de ressorts 61 de type Belleville disposés dans un logement prévu à cet effet dans l'armature 31, et sollicitant un piston 60, celui-ci agissant lui-même sur le levier 32 par l'intermédiaire d'une bille 37 logée à l'extrémité d'une vis 36 portée par le levier 32.

En vissant plus ou moins la vis 36 dans le levier 32, il est possible de régler la pression de contact des galets 34 contre la couronne 4, un écrou 38 évitant tout dévissage intempestif.

On comprend donc que la mâchoire 3 assure la retenue de l'anneau 4, et de l'ensemble de l'avion à l'extrémité de la perche 1, tout en autorisant les déplacements circonférentiels de la couronne entre les deux jeux de galets 34 et 35 ; naturellement la présence de ces galets est destinée à assurer un roulement de la couronne dans la mâchoire, ce qui réduit considérablement les frottements.

La présence de galets 35 de part et d'autre de l'âme 40 empêche l'échappement latéral de l'anneau. Il serait possible de prévoir, en outre, des galets supplémentaires, disposés orthogonalement par rapport aux galets 34, 35, et adaptés pour enserrer l'âme 40 en s'appliquant de chaque côté de celle-ci.

Comme déjà dit plus haut, l'avion - et corrélativement l'ensemble du manège - est mû par une hélice 25 qui est entraînée par un moteur ; celui-ci est avantageusement relié à un mécanisme d'amplification ou de réduction de vitesse, et le pilote dispose d'un système de réglage de la vitesse de rotation de l'hélice.

Si on a affaire à un moteur électrique, l'alimentation électrique de ce moteur se fera à partir de l'extérieur au moyen de deux jeux de bagues tournantes et conductrices de courant coopérant avec des balais munis de charbons ; l'un de ces jeux sera disposé au niveau de la chape 14 tournante d'axe horizontal, et l'autre au niveau de la couronne circulaire 4. Ces moyens de transmission de l'énergie électrique entre un élément fixe et une pièce tournante sont bien connus et n'ont pas été représentés sur les figures pour ne pas les alourdir inutilement.

Comme sur un avion traditionnel, le pilote a à sa disposition un dispositif de pilotage, du type "manche à balai", dont la manoeuvre lui permet d'agir, par l'intermédiaire d'une tringlerie appropriée, sur les différentes gouvernes prévues sur la voilure ; il peut ainsi effectuer des mouvements de montée et de descente (par pivotement autour de l'axe A3) et des mouvements de roulis (par pivotement autour de l'axe X-X') ; par contre, il n'a pas été prévu sur ce manège une possibilité de mouvements en lacet.

Comme on le voit à la figure 7, il est prévu à l'intérieur de l'avion un contrepoids 7 qui peut se déplacer en translation suivant l'axe longitudinal de l'avion ; un dispositif de déplacement de ce contrepoids, par exemple motorisé, permet au pilote d'assurer l'équilibrage de l'ensemble avion-pilote autour de l'axe (A3). Si on suppose que l'avion seul est déjà statiquement équilibré par rapport à cet axe, il suffira naturellement de déplacer la masse 7 pour que le moment de son poids (P2) soit égal et opposé au moment du poids (P1) du pilote par rapport à cet axe ; de préférence, le pilote aura à portée de la main la commande du déplacement de ce contrepoids 7.

On va maintenant décrire le mode d'utilisation de ce manège.

Le contrepoids 7 ayant été positionné de façon à équilibrer statiquement l'avion autour de l'axe (A3) en tenant compte du poids du pilote, et le contrepoids 11 ayant été placé dans une position correcte, facilitant l'envol de la façon souhaitée, le pilote met en marche le moteur d'entraînement de l'hélice 25. L'avion commence par rouler sur le sol, suivant une trajectoire circulaire, la propulsion se faisant par la rotation de l'hélice. Ensuite, le pilote agit sur le manche à balai pour actionner les gouvernes et provoquer l'envol de l'avion ; celui-ci s'élève, tandis que la perche 1 pivote autour de l'axe (A2), ce mouvement étant naturellement facilité par le contrepoids 11. Grâce à l'invention, le pilote peut effectuer non seulement des mouvements de tangage et de roulis limités autour des axes (X-X') et (A3) respectivement, mais peut également effectuer des figures de voltiges autour de ces axes.

Ces figures sont rendues possibles en raison de la possibilité de déplacement de l'anneau 4 dans la mâchoire (double flèche h, figure 3), et de l'articulation de la mâchoire 3 dans le palier 50 (double flèche g).

Il est évident que tout combinaison de ces deux rotations est possible et l'avion pourra par exemple effectuer un tonneau en montée ou piqué, ou une boucle assortie de tonneaux, ou enfin voler sur la tranche, sur le dos ou dans toute autre position intermédiaire.

Une caractéristique essentielle de l'invention réside dans le fait que l'avion est pourvu de deux plans 22, 23 décalés par rapport à l'axe (A3). L'intérêt de ces deux plans est qu'ils procurent, au cours du mouvement de rotation de la perche 1, deux forces de portance symétriques (F22) et (F23) par rapport à l'axe (A3), de sorte que l'on évite un effet de tangage intempestif ; en effet, pour les vitesses relativement faibles auxquelles le manège fonctionne, le stabilo 24 situé au sommet de la dérive arrière engendre une force de portance (F24) nettement insuffisante pour assurer seul cette fonction stabilisatrice.

L'avion étant dynamiquement équilibré grâce aux deux plans, le stabilo peut donc jouer pleinement son rôle, même à vitesse faible ou moyenne.

Les deux plans 22 et 23 sont décalés de façon à ce que l'écoulement de l'air sur le plan avant ne perturbe pas l'écoulement de l'air sur le plan arrière, et ce de façon à lui garder toute son efficacité ; ces deux plans ne sont pas forcément de mêmes dimensions, ni de même surface.

Il ressort clairement des explications qui précèdent, que l'invention permet de multiplier considérablement les possibilités d'évolution de ce genre de manège, ce qui présente un grand intérêt, non seulement pour les activités de sport et de loisir, mais aussi pour l'entraînement des pilotes à la voltige, cet entraînement pouvant être réalisé en toute sécurité.

Il peut être prévu de disposer sur la couronne 4 des butées permettant de limiter, si on le souhaite, l'amplitude du roulis ; de telles butées sont représentées à la figure 4 avec la référence 400 ; elles sont fixées à la couronne, de préférence de manière amovible (par exemple à l'aide de vis), de sorte qu'en l'absence de butées, l'avion pourra effectuer des rotations complètes de 360° pour effectuer des tonneaux ; de manière similaire, des butées peuvent être prévues pour limiter le mouvement de basculement de l'avion autour de l'axe (A3) (mouvement de tangage).

Sans sortir du cadre de l'invention, on pourrait remplacer la couronne circulaire 4 par une portion de couronne incomplète, en arc-de-cercle (par exemple en demi-cercle) centrée sur l'axe X-X'. Une telle construction, qui n'autoriserait pas des figures de tonneaux complètes, mais seulement des mouvements de roulis d'amplitude limitée, s'adresserait par exemple à des pilotes débutants ; dans ce cas, il serait naturellement nécessaire de prévoir, aux deux extrémités de la portion de couronne, des butées d'arrêt - de préférence amortisseuses - empêchant la désolidarisation en fin de course de la couronne d'avec la mâchoire.

L'invention peut être naturellement appliquée à d'autres types d'avion que celui qui a été représenté, notamment à un avion à plusieurs places.


**Revendications**


1. Manège à effect ascensionnel, du type comprenant un avion destiné à l'entraînement et/ou à l'amusement d'un pilote, qui est monté à l'extrémité d'une perche mobile en rotation autour d'un axe vertical (A1) de manière à décrire un mouvement circulaire autour de cet axe, ladite perche étant également mobile autour d'un axe horizontal (A2) de manière à permettre une variation en altitude de l'avion au cours de son mouvement circulaire, et un contrepoids étant prévu à l'extrémité de la perche opposée à l'avion, de l'autre côté de l'axe vertical (A1), ce contrepoids équilibrant sensiblement le poids de l'avion et celui du pilote, caractérisé en ce que :
- la fixation de l'avion (2) à la perche (1) est assurée au moyen d'une mâchoire (3) qui est adaptée pour retenir une couronne circulaire (4) - complète ou partielle - solidaire de l'avion (2) et entourant le fuselage (20), cette couronne étant contenue dans un plan perpendiculaire à l'axe longitudinal (X-X') de l'avion et centrée sur celui-ci, la mâchoire (3) supportant la couronne (4) et l'avion (2) à l'extrémité de la perche (1), tout en autorisant leur libre rotation autour dudit axe longitudinal (X-X') ;
- l'avion (2) est un avion du type biplan, dont les deux plans (22, 23) sont situés de part et d'autre de l'axe longitudinal de la perche, l'un (22) en avant et l'autre (23) en arrière de ce dernier, de telle manière qu'ils engendrent au cours du mouvement circulaire du manège deux moments de portance sensiblement égaux et opposés, ce qui permet d'éviter tout effet de tangage intempestif.

2. Manège selon la revendication 1, caractérisé en ce que le centre de gravité de l'ensemble constitué par l'avion (2) et le pilote est sensiblement situé dans le plan contenant la couronne (4).

3. Manège selon l'une des revendications 1 ou 2, caractérisé en ce que la couronne (4) a une section en "T".

4. Manège selon l'une des revendications 1 à 3, caractérisé en ce que le contact de la mâchoire (3) avec la couronne (4) se fait par l'intermédiaire de galets de roulement (34, 35).

5. Manège selon les revendications 3 et 4 prises en combinaison, caractérisé en ce qu'il est prévu deux jeux de galets de roulement (34, 35) qui sont situés de chaque côté de la branche supérieure (41) de la section en T de la couronne (4), le jeu (35) situé au-dessous de ladite branche supérieure comprenant des galets disposés de part et d'autre de la branche verticale (40) de cette section.

6. Manège selon la revendication 5, caractérisé en ce que l'un (34) des deux jeux de galets (34, 35) est porté par un étrier mobile (33) sollicité par un système élastique (6) qui les applique élastiquement contre la couronne (4).

7. Manège selon l'une des revendications 1 à 6, caractérisé en ce que la mâchoire (3) est articulée autour d'un axe (A3) qui correspond sensiblement à l'axe longitudinal de la perche (1).

8. Manège selon la revendication 1, caractérisé en ce que les deux plans (22, 23) sont décalés en hauteur de façon à ce que l'écoulement de l'air sur le plan avant (22) ne perturbe pas l'écoulement de l'air sur le plan arrière (23).

9. Manège selon l'une des revendications 1 à 8, caractérisé en ce qu'il est prévu à l'intérieur de l'avion (2) un contrepoids mobile (7), qui peut être déplacé suivant la direction longitudinale de l'avion de manière à permettre un équilibrage statique de ce dernier par rapport à l'axe longitudinal de la perche (1).

10. Manège selon l'une des revendications 1 à 9, caractérisé en ce que l'avion (2) est mû par une hélice (25) entraînée par un moteur, par exemple un moteur électrique logé dans l'avion.

11. Manège selon l'une des revendications 1 à 10, caractérisé en ce que la couronne (4) est une couronne circulaire complète autorisant la libre rotation de l'avion sur 360° autour de l'axe (X-X'), ce qui permet au pilote d'effectuer des tonneaux.

12. Manège selon l'une des revendications 1 à 10, caractérisé en ce que la couronne (4) est une couronne incomplète en forme d'arc de cercle.

13. Manège selon l'une des revendications 1 à 12, caractérisé en ce que la couronne (4) est pourvue de butées (400), de préférence amovibles, adaptées pour limiter l'amplitude de rotation de l'avion autour de l'axe (X-X').

FIG_1

FIG_2

## FIG_3

## FIG_4

FIG.5

FIG.6

FIG.7

EP 0 316 249 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | GB-A- 127 820 (M. LENDER et al.) <br> * Page 4, lignes 1-42; figures 14-16 * <br> --- | 1,3-5, 11-13 | G 09 B 9/08 |
| A | US-A-2 357 481 (H. MALLON) <br> * Page 1, colonne 1, lignes 35-55; figures * <br> --- | 1 | |
| A | US-A-3 760 510 (A. ANDERSON JR.) <br> ----- | 1,10 | |

DOMAINES TECHNIQUES RECHERCHES (Int. Cl.4)

G 09 B
B 64 F

Le présent rapport a été établi pour toutes les revendications

| Lieu de la recherche | Date d'achèvement de la recherche | Examinateur |
|---|---|---|
| LA HAYE | 12-12-1988 | ODGERS M.L. |